# FASCICULE DE BREVET EUROPEEN

(11) **EP 3 894 469 B1**
(45) Date de publication et mention de la délivrance du brevet: **12.10.2022**
(21) Numéro de dépôt: 19816700.9
(22) Date de dépôt: 09.12.2019
(51) Int. Cl.: C08K 5/092, C09D 195/00, E01C 7/18, E04B 1/66, C08J 3/12

(54) **GRANULES DE BITUME SOLIDES A TEMPERATURE AMBIANTE**
BEI UMGEBUNGSTEMPERATUR FESTE BITUMENGRANULATE
BITUMEN GRANULES WHICH ARE SOLID AT AMBIENT TEMPERATURE

(30) Priorité: 12.12.2018 FR 1872747
(43) Date de publication de la demande: 20.10.2021
(73) Titulaire: TotalEnergies OneTech, 92400 Courbevoie (FR)
(72) Inventeur: VINCENT, Régis, 69520 Grigny (FR); COLLIAT, Romain, 38300 Ruy-Montceau (FR)
(74) Mandataire: Corizzi, Valérie
(86) Numéro de dépôt international: PCT/EP2019/084261
(87) Numéro de publication internationale: WO 2020/120408

(56) Documents cités:
- WO-A1-2016/016318
- FR-A1- 3 059 674

## Description

### Domaine technique

La présente invention concerne des granules de bitume solide à température ambiante, notamment à température ambiante élevée. La présente invention concerne également un procédé de fabrication de ces granules ainsi que leur utilisation comme liant routier. La présente invention concerne enfin un procédé de transport et/ou de stockage et/ou de manipulation d'un bitume dans lequel le bitume est transporté et/ou stocké et/ou manipulé à température ambiante, notamment à température ambiante élevée, sous la forme de granules de bitume selon l'invention.

### Etat de la technique antérieure

Le bitume ou liant bitumeux est le principal liant hydrocarboné utilisé dans les domaines de la construction routière et du génie civil. Pour pouvoir être utilisé comme liant dans ces différentes applications, le bitume doit présenter certaines propriétés physico-chimiques et mécaniques. Il doit notamment être suffisamment dur et avoir une bonne consistance aux températures d'usage pour éviter par exemple la formation d'ornières provoquées par le trafic. Le bitume doit aussi être élastique pour résister aux déformations imposées par le trafic et/ou les changements de température, ces phénomènes conduisant à la fissuration des enrobés et/ou à l'arrachement des granulats superficiels. Enfin, le bitume doit être suffisamment fluide à des températures d'application les moins élevées possibles pour permettre, par exemple, un bon enrobage des granulats et la mise en place de l'enrobé sur la route. La mise en œuvre d'un liant bitumineux nécessite donc de conjuguer à la fois la dureté, la consistance, voire aussi l'élasticité du bitume aux températures d'usage et une faible viscosité aux températures de mise en œuvre et d'application.

Le bitume seul n'étant en général pas assez élastique, on ajoute au bitume des polymères qui peuvent être éventuellement réticulés. Ces polymères réticulés apportent aux compositions bitumineuses des propriétés élastiques nettement améliorées. Cependant, la réticulation des polymères est irréversible : une fois la réticulation effectuée, il n'est pas possible de revenir à l'état initial existant avant la réaction de réticulation. Les compositions bitumineuses réticulées ont ainsi de bonnes propriétés élastiques, mais présentent une viscosité très élevée. Un des inconvénients liés à cette viscosité élevée, est la nécessité de chauffer le bitume réticulé à une température de mise en œuvre et d'application supérieure à celle d'un bitume non réticulé, ce qui accroît les dépenses énergétiques et nécessite l'usage de protections supplémentaires pour les opérateurs.

Suivant les applications visées, il est nécessaire de trouver le bon compromis entre les propriétés mécaniques dont l'élasticité, la dureté, la consistance, la fluidité et la viscosité, notamment la viscosité à chaud du liant.

Une autre problématique dans l'utilisation du bitume est liée à son transport, sa manipulation et son stockage. De manière générale, le bitume est stocké et transporté à chaud, en vrac, dans des camions-citernes ou par bateaux à des températures élevées de l'ordre de 120°C à 180°C. Or, le stockage et le transport du bitume à chaud présentent certains inconvénients. Le transport du bitume à chaud sous forme liquide est considéré comme dangereux et il est très encadré d'un point de vue règlementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du bitume pourra augmenter durant un trajet trop long. Les distances de livraison du bitume à chaud sous sa forme fluide sont donc limitées. D'autre part, le maintien du bitume à des températures élevées dans les cuves ou dans les camions-citernes consomme de l'énergie. En outre, le maintien du bitume à des températures élevées pendant une longue période peut affecter les propriétés du bitume et ainsi changer les performances finales de l'enrobé.

Pour pallier les problèmes du transport et du stockage du bitume à chaud, des conditionnements permettant le transport et le stockage des bitumes à température ambiante ont été développés. Ce mode de transport du bitume en conditionnement à température ambiante ne représente qu'une fraction minime des quantités transportées dans le monde, mais il correspond à des besoins bien réels pour les régions géographiques d'accès difficile et coûteux par les moyens de transport traditionnels.

EP1917309 enseigne la préparation d'une base bitume présentant certaines caractéristiques d'un bitume soufflé par l'addition d'un additif de soufflage de formule Ar₁-R-Ar₂. Ce document n'est pas concerné pas les problématiques liées au transport et/ou au stockage des compositions qu'il divulgue.

US 3 026 568 décrit des granules de bitume recouverts d'un matériau poudreux, tel que de la poudre de calcaire. Néanmoins, ce type de bitume en granules n'empêche pas le fluage du bitume, notamment à température ambiante élevée.

La demande WO 2008107551 décrit un mode de réticulation réversible des compositions bitumineuses basé sur l'utilisation d'additifs organogélateurs. Les compositions bitumineuses réticulées de manière thermoréversible ainsi obtenues sont dures aux températures d'usage et présentent une viscosité réduite aux températures d'application.

La demande WO 2009/153324 décrit des granules de bitume enrobés par un agent anti-agglomérant polymérique, en particulier du polyéthylène. L'inconvénient de cet enrobage est qu'il modifie les propriétés du bitume lors de son application routière.

La demande WO 2016/016318 décrit des granules de bitume comprenant un additif chimique.

La demande WO 2018/115729 divulgue la préparation de granules de liant comprenant au moins un composé acide de formule R-(COOH)_{z} et au moins un composé amide de formule R'-(NH)ₙCONH-(X)ₘ-(NHCO)ₚ(NH)ₙ-R".

Les granules de bitume divulgués dans ces deux documents permettent le transport et/ou le stockage et/ou la manipulation du bitume à température ambiante sans que celui-ci ne flue, ainsi que la réduction de leur adhésion et agglomération entre eux.

Aucun de ces documents ne divulgue de compositions comprenant l'association de plus de deux additifs organogélateurs.

Dans la continuité de ses travaux, la Demanderesse a découvert de manière surprenante une nouvelle composition bitumineuse solide à température ambiante, utilisable comme liant routier et permettant d'éviter et de réduire plus efficacement l'adhésion et l'agglomération lors de son transport et/ou stockage et/ou manipulation, à température ambiante élevée, sur des longues périodes et dont les propriétés sont conservées au cours du temps par rapport aux granules de l'art antérieur.

Plus précisément, la Demanderesse a mis en évidence que cette nouvelle composition bitumineuse, conditionnée sous la forme de granules, permet de résister plus efficacement au fluage dans des conditions extrêmes de transport et/ou de stockage et/ou de manipulation, en particulier dans des conditions de compression, notamment dues au stockage, sur des périodes très longues.

### Résumé de l'invention

L'invention concerne tout d'abord des granules de bitume comprenant au moins:
a) du bitume,
b) un composé de formule générale (I):

   R₁-(COOH)_{z} (I)

   dans laquelle R₁ représente une chaîne hydrocarbonée linéaire ou ramifiée comprenant de 4 à 68 atomes de carbone, et z est un entier variant de 2 à 4,
c) un composé de formule générale (II):

   R₂-(NH)ₙCONH-X-(NHCO)ₚ(NH)ₙ-R₃ (II)

   dans laquelle :
   - les groupements R₂ et R₃, identiques ou différents, représentent une chaîne hydrocarbonée comprenant de 1 à 22 atomes de carbone, et comprenant éventuellement des hétéroatomes tels que N, O, S, et R₃ peut être H,
   - le groupement X représente une chaîne hydrocarbonée comprenant de 1 à 22 atomes de carbone, éventuellement substituée, et comprenant éventuellement des hétéroatomes, tels que N, O, S,
   - n et p sont des entiers ayant une valeur de 0 ou 1 indépendamment l'un de l'autre.
d) un composé de formule générale (III) :

   Arl-R-Ar2 (III)

   dans laquelle :
   - Ar1 et Ar2 représentent, indépendamment l'un de l'autre, un groupement aromatique comprenant de 6 à 20 atomes de carbone et choisi parmi un noyau benzène ou un système de noyaux aromatiques condensés, ledit groupement aromatique étant substitué par au moins un groupement hydroxyle, et optionnellement par un ou plusieurs groupements alkyles en C₁-C₂₀, et
   - R représente un radical hydrocarboné divalent éventuellement substitué, dont la chaîne principale comprend de 6 à 20 atomes de carbone et au moins un groupement choisi parmi les fonctions amide, ester, hydrazide, urée, carbamate, anhydride.

De préférence, le composé de formule (I) est choisi parmi les diacides de formule générale (IA) :

HOOC-C_{w}H_{2w}-COOH (IA)

avec w un entier variant de 4 à 22, de préférence de 4 à 12.

De préférence, le composé de formule générale (II) est choisi parmi les composés de formule (IIA) :

R₂-CONH-X-NHCO-R₃ (IIA)

dans laquelle R₂, R₃ et X sont tels que définis ci-dessus.

Avantageusement, le composé de formule générale (III) est le 2',3-bis[(3-[3, 5-di-*tert*-butyl-4-hydroxyphenyl]propionyl)]propionohydrazide.

De préférence, les granules de bitume selon l'invention comprennent de 0,1% à 10% en masse d'un ou de plusieurs composés de formule (I), plus préférentiellement de 0,5% à 6% en masse, plus préférentiellement de 0,5% à 5% en masse, encore plus préférentiellement de 0,5% à 2,5% en masse, par rapport à la masse totale des granules.

De préférence, les granules de bitume selon l'invention comprennent de 0,1% à 10% en masse d'un ou de plusieurs composés de formule (II), plus préférentiellement de 0,5% à 6% en masse, plus préférentiellement de 0,5% à 5% en masse, encore plus préférentiellement de 0,5% à 3,5% en masse, par rapport à la masse totale des granules.

De préférence, les granules de bitume selon l'invention comprennent de 0,1% à 10% en masse d'un ou de plusieurs composés de formule (III), plus préférentiellement de 0,5% à 6% en masse, plus préférentiellement de 0,5% à 5% en masse, encore plus préférentiellement de 0,5% à 3% en masse, par rapport à la masse totale des granules.

Selon un mode de réalisation, les granules de bitume selon l'invention sont recouverts sur au moins une partie de leur surface d'un agent antiagglomérant, de préférence choisi parmi les agents anti-agglomérants particulaires, les agents antiagglomérants filmogènes et leurs mélanges.

L'invention concerne également un procédé de fabrication de granules de bitume tels que définis ci-dessus et de manière détaillée ci-dessous comprenant au moins les étapes suivantes :
1) la fourniture d'une composition bitumineuse comprenant au moins : du bitume, un composé de formule générale (I), un composé de formule générale (II) et un composé de formule (III),
2) la mise en forme de ladite composition bitumineuse sous la forme de granules, et
3) éventuellement, l'enrobage des granules sur tout ou partie de leur surface par au moins un agent anti-agglomérant.

L'invention a également pour objet des granules de bitume susceptibles d'être obtenus par la mise en œuvre du procédé selon l'invention.

L'invention concerne encore l'utilisation de granules de bitume tels que définis ci-dessus et de manière détaillée ci-dessous comme liant routier.

L'invention concerne plus particulièrement l'utilisation de granules de bitume tels que définis ci-dessus et de manière détaillée ci-dessous pour la fabrication d'enrobés.

L'invention concerne en outre un procédé de fabrication d'enrobés comprenant au moins un liant routier et des granulats ou des agrégats d'enrobés bitumineux recyclés, le liant routier étant sous la forme de granules de bitume tels que définis ci-dessus ou de manière détaillée ci-dessous, ce procédé comprenant au moins les étapes de :
- chauffage des granulats ou des agrégats à une température allant de 100°C à 180°C, de préférence de 120°C à 180°C,
- mélange des granulats ou des agrégats avec le liant routier dans une cuve telle qu'un malaxeur ou un tambour malaxeur,
- obtention d'enrobés.

Avantageusement, le procédé de fabrication d'enrobés selon l'invention ne comporte pas d'étape de chauffage du liant routier avant son mélange avec les granulats ou les agrégats.

L'invention concerne enfin un procédé de transport et/ou de stockage et/ou de manipulation de bitume, ledit bitume étant transporté et/ou stocké et/ou manipulé à température ambiante sous la forme de granules de bitume tels que définis ci-dessus ou de manière détaillée ci-dessous.

### Description détaillée

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes, sauf mention contraire explicite. Cette expression signifie donc que l'intervalle visé comprend les valeurs X, Y et toutes les valeurs allant de X à Y.

La présente invention concerne des granules de bitume comprenant au moins :
a) du bitume,
b) un composé de formule générale (I):

   R₁-(COOH)_{z} (I)

   dans laquelle R₁ représente une chaîne hydrocarbonée, linéaire ou ramifiée, saturée ou insaturée comprenant de 4 à 68 atomes de carbone, et z est un entier variant de 2 à 4,
c) un composé de formule générale (II):

   R₂-(NH)ₙCONH-X-(NHCO)p(NH)ₙ-R₃ (II)

   dans laquelle :
   - les groupements R₂ et R₃, identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en C₅-C₂₄ et/ou des hétérocycles hydrocarbonés en C₄-C₂₄ comprenant un ou plusieurs hétéroatomes tels que N, O, S, et R₃ peut être H,
   - le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en C₅-C₂₄ et/ou des hétérocycles hydrocarbonés en C₄-C₂₄ comprenant un ou plusieurs hétéroatomes tels que N, O, S,
   - n et p sont des entiers ayant une valeur de 0 ou 1 indépendamment l'un de l'autre, et
d) un composé de formule générale (III) Ar1-R-Ar2 (III) dans laquelle :
   - Ar1 et Ar2 représentent indépendamment l'un de l'autre un groupement aromatique comprenant de 6 à 20 atomes de carbone et choisi parmi un noyau benzène ou un système de noyaux aromatiques condensés, ledit groupement aromatique étant substitué par au moins un groupement hydroxyle, et optionnellement par un ou plusieurs groupements alkyles en C₁-C₂₀, et
   - R représente un radical hydrocarboné divalent éventuellement substitué, dont la chaîne principale comprend de 6 à 20 atomes de carbone et au moins un groupement choisi parmi les fonctions amide, ester, hydrazide, urée, carbamate, anhydride.

Préférentiellement, les granules de bitume selon l'invention sont essentiellement constitués :
a) de bitume,
b) d'un ou de plusieurs composés de formule (I) telle que définie ci-dessus et de manière détaillée ci-dessous,
c) d'un ou de plusieurs composés de formule (II) telle que définie ci-dessus et de manière détaillée ci-dessous, et
d) d'un ou de plusieurs composés de formule (III) telle que définie ci-dessus et de manière détaillée ci-dessous.

Plus préférentiellement, les granules de bitume selon l'invention comprennent, de préférence sont essentiellement constitués :
a) de 70% à 99,7% en masse de bitume,
b) de 0,1% à 10% en masse d'un ou de plusieurs composés de formule (I) telle que définie ci-dessus et de manière détaillée ci-dessous,
c) de 0,1% à 10% en masse d'un ou de plusieurs composés de formule (II) telle que définie ci-dessus et de manière détaillée ci-dessous, et
d) de 0,1% à 10% en masse d'un ou de plusieurs composés de formule (III) telle que définie ci-dessus et de manière détaillée ci-dessous,
par rapport à la masse totale des granules de bitume selon l'invention.

Avantageusement, les granules de bitume selon l'invention comprennent, de préférence sont essentiellement constitués :
a) de 82% à 98,5% en masse de bitume,
b) de 0,5% à 6% en masse d'un ou de plusieurs composés de formule (I) telle que définie ci-dessus et de manière détaillée ci-dessous,
c) de 0,5% à 6% en masse d'un ou de plusieurs composés de formule (II) telle que définie ci-dessus et de manière détaillée ci-dessous, et
d) de 0,5% à 6% en masse d'un ou de plusieurs composés de formule (III) telle que définie ci-dessus et de manière détaillée ci-dessous,
par rapport à la masse totale des granules de bitume selon l'invention.

Plus avantageusement, les granules de bitume selon l'invention comprennent, de préférence sont essentiellement constitués :
a) de 85% à 98,5% en masse de bitume,
b) de 0,5% à 5% en masse d'un ou de plusieurs composés de formule (I) telle que définie ci-dessus et de manière détaillée ci-dessous,
c) de 0,5% à 5% en masse d'un ou de plusieurs composés de formule (II) telle que définie ci-dessus et de manière détaillée ci-dessous, et
d) de 0,5% à 5% en masse d'un ou de plusieurs composés de formule (III) telle que définie ci-dessus et de manière détaillée ci-dessous,
par rapport à la masse totale des granules de bitume selon l'invention.

Encore plus avantageusement, les granules de bitume selon l'invention comprennent, de préférence sont essentiellement constitués :
a) de 91% à 98,5% en masse de bitume,
b) de 0,5% à 2,5% en masse d'un ou de plusieurs composés de formule (I) telle que définie ci-dessus et de manière détaillée ci-dessous,
c) de 0,5% à 3,5% en masse d'un ou de plusieurs composés de formule (II) telle que définie ci-dessus et de manière détaillée ci-dessous, et
d) de 0,5% à 3% en masse d'un ou de plusieurs composés de formule (III) telle que définie ci-dessus et de manière détaillée ci-dessous,
par rapport à la masse totale des granules de bitume selon l'invention.

### Le bitume

Les granules de bitume selon l'invention peuvent contenir des bitumes issus de différentes origines. Parmi les bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bitumes selon l'invention sont avantageusement choisis parmi les bitumes provenant du raffinage du pétrole brut ou issus des sables bitumineux. Les bitumes peuvent être choisis parmi les bitumes ou mélanges de bitumes provenant du raffinage du pétrole brut, en particulier des bitumes contenant des asphaltènes ou des brais. Les bitumes peuvent être obtenus par des procédés conventionnels de fabrication des bitumes en raffinerie, en particulier par distillation directe et/ou distillation sous vide du pétrole. Ces bitumes peuvent être éventuellement viscoréduits et/ou désasphaltés et/ou rectifiés à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus de la distillation atmosphérique. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air. Les différents bitumes ou bases bitumes obtenus par les procédés de raffinage peuvent être combinés entre eux pour obtenir le meilleur compromis technique. Le bitume peut aussi être un bitume de recyclage. Les bitumes peuvent être des bitumes de grade dur ou de grade mou.

Avantageusement, le bitume est choisi parmi les bitumes d'origine naturelle ; les bitumes issus des sables bitumineux ; les bitumes issus du raffinage du pétrole brut tels que les résidus de distillation atmosphérique, les résidus de distillation sous vide, les résidus viscoréduits, les résidus soufflés et leurs mélanges ; et leurs combinaisons ou parmi les bitumes synthétiques autrement appelés liants clairs.

De préférence, les granules de bitume selon l'invention comprennent de 70% à 99,7% en masse de bitume, plus préférentiellement de 82% à 98,5% en masse de bitume, encore plus préférentiellement de 85% à 98,5% en masse de bitume, et avantageusement de 91% à 98,5% en masse de bitume, par rapport à la masse totale des granules de bitume selon l'invention.

### Le composé de formule (I)

Les granules de bitume selon l'invention comprennent au moins un composé de formule générale (I):

R₁-(COOH)_{z} (I)

dans laquelle R₁ représente une chaîne hydrocarbonée linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R₁ est une chaîne linéaire saturée de formule C_{w}H_{2w} avec w un entier variant de 4 à 22, de préférence de 4 à 12.

Les composés de formule (I) peuvent notamment être des diacides (z = 2), des triacides (z = 3) ou des tétracides (z = 4). De préférence, le composé de formule (I) est choisi parmi les diacides avec z = 2. De préférence, les diacides ont pour formule générale HOOC-C_{w}H_{2w}-COOH avec w un entier variant de 4 à 22, de préférence de 4 à 12 et où z = 2 et R₃= C_{w}H_{2w}.

Avantageusement, le composé de formule (I) choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12. Plus avantageusement, le composé de formule (I) est l'acide sébacique.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné. Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

La teneur en composé de formule (I) dans les granules de bitume selon l'invention va, de préférence, de 0,1% à 10% en masse, plus préférentiellement de 0,5% à 6% en masse, plus préférentiellement de 0,5% à 5% en masse et encore plus préférentiellement de 0,5% à 2,5% en masse, par rapport à la masse totale des granules de bitume selon l'invention.

### Le composé de formule (II)

Les granules de bitume selon l'invention comprennent également au moins un composé de formule générale (II) :

R₂-(NH)ₙCONH-X-(NHCO)p(NH)ₙ-R₃ (II)

dans laquelle :
- les groupements R₂ et R₃, identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en C₅-C₂₄ et/ou des hétérocycles hydrocarbonés en C₄-C₂₄ comprenant un ou plusieurs hétéroatomes tels que N, O, S, et R₃ peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en C₅-C₂₄ et/ou des hétérocycles hydrocarbonés en C₄-C₂₄ comprenant un ou plusieurs hétéroatomes tels que N, O, S ;
- n et p sont des entiers ayant une valeur de 0 ou 1 indépendamment l'un de l'autre.

De préférence, le groupement R₂ et/ou R₃ comprend une chaîne hydrocarbonée aliphatique de 4 à 22 atomes de carbone, notamment, choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

De préférence, le groupement X représente une chaîne hydrocarbonée linéaire, saturée comprenant de 1 à 22 atomes de carbone, avantageusement de 1 à 12 atomes de carbone, encore mieux de 1 à 4 atomes de carbone. Plus préférentiellement, le groupement X est choisi parmi les groupements C₂H₄, C₃H₆.

De préférence, le composé de formule générale (II) est choisi parmi ceux qui satisfont à la condition n = 0.

De préférence, le composé de formule générale (II) est choisi parmi ceux qui satisfont à la condition : la somme des nombres des atomes de carbone de R₂, X et R₃ est supérieur ou égal à 10, avantageusement supérieur ou égal à 14, de préférence supérieur ou égal à 18.

De préférence, le composé de formule générale (II) est choisi parmi ceux qui satisfont à la condition : le nombre des atomes de carbone de l'un au moins de R₂ et R₃ est supérieur ou égal à 10, avantageusement supérieur ou égal à 12, de préférence supérieur ou égal à 14.

De préférence, le composé de formule générale (II) est choisi parmi ceux de formule (IIA) :

R₂-CONH-X-NHCO-R₃ (IIA)

dans laquelle R₂, R₃ et X ont la même définition que ci-dessus.

De préférence, dans la formule (IIA), le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements C₂H₄, C₃H₆. Plus préférentiellement, le composé de formule générale (IIA) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂. De façon encore plus avantageuse, le composé de formule générale (IIA) est le N,N'-éthylènedi(stéaramide) de formule C₁₇H₃₅-CONH-CH₂-CH₂-NHCO-C₁₇H₃₅.

La teneur en composé de formule (II) dans les granules de bitume selon l'invention va, de préférence, de 0,1% à 10% en masse, plus préférentiellement de 0,5% à 6% en masse, plus préférentiellement de 0,5% à 5% en masse et encore plus préférentiellement de 0,5% à 3,5% en masse, par rapport à la masse totale granules de bitume selon l'invention.

### Le composé de formule (III)

Les granules de bitume selon l'invention comprennent enfin au moins un composé de formule générale (III) :

Arl-R-Ar2 (III)

dans laquelle :
- Ar1 et Ar2 représentent indépendamment l'un de l'autre un groupement aromatique comprenant de 6 à 20 atomes de carbone et choisi parmi un noyau benzène ou un système de noyaux aromatiques condensés, ledit groupement aromatique étant substitué par au moins un groupement hydroxyle, et optionnellement par un ou plusieurs groupements alkyles en C₁-C₂₀, et
- R représente un radical hydrocarboné divalent éventuellement substitué, dont la chaîne principale comprend de 6 à 20 atomes de carbone et au moins un groupement choisi parmi les fonctions amide, ester, hydrazide, urée, carbamate, anhydride, de préférence un groupement hydrazide.

De préférence, Ar1 et/ou Ar2 sont substitués par au moins un groupe alkyle de 1 à 10 atomes de carbone, avantageusement en une ou des positions *ortho* par rapport au(x) groupe(s) hydroxyle(s), plus préférentiellement Ar1 et Ar2 sont des groupes 3,5-dialkyl-4-hydroxyphényle, avantageusement des groupes 3,5-di-*tert*-butyl-4-hydroxyphényle.

De préférence, R est en position *para* par rapport à un groupe hydroxyle de Ar1 et/ou Ar2.

Avantageusement, le composé de formule (III) est le 2',3-bis[(3-[3, *5-di-tert-*butyl-4-hydroxyphenyl]propionyl)]propionohydrazide.

La teneur en composé de formule (III) dans les granules de bitume selon l'invention va, de préférence, de 0,1% à 10% en masse, plus préférentiellement de 0,5% à 6% en masse, plus préférentiellement de 0,5% à 5% en masse et encore plus préférentiellement de 0,5% à 3% en masse, par rapport à la masse totale des granules de bitume selon l'invention.

### Les granules de bitume selon l'invention

Les granules de bitume selon l'invention peuvent présenter toute forme divisée qui permette de favoriser le transport et/ou le stockage et/ou l'utilisation et/ou la manutention du bitume.

Les granules de bitume selon l'invention peuvent avoir au sein d'une même population de granules, une ou plusieurs formes divisées distinctes. De préférence, les granules selon l'invention ont une forme cylindrique, sphérique, hémisphérique, ovoïde ou tétraédrique, notamment sous la forme de berlingots.

Selon un mode de réalisation de l'invention, la taille des granules selon l'invention est telle que la dimension moyenne la plus longue est de préférence inférieure ou égale à 50 mm, plus préférentiellement va de 3 à 30 mm, encore plus préférentiellement va de 5 à 20 mm. De préférence, lorsque les granules de bitume selon l'invention présentent une forme spérique, hémisphérique ou ovoïde, la taille des granules selon l'invention est telle que la dimension moyenne la plus longue va de 3 à 30 mm, encore plus préférentiellement de 5 à 20 mm. De préférence, lorsque les granules de bitume selon l'invention présentent une forme tétraédrique, la taille des granules selon l'invention est telle que la dimension moyenne la plus longue va de 2 à 50 mm, encore plus préférentiellement de 5 à 50 mm. Par exemple, l'utilisation d'une filière permet de contrôler la fabrication de granules d'une taille choisie. Un tamisage permet de sélectionner des granules en fonction de leur taille.

De préférence, les granules selon l'invention présentent un poids allant de 0,1 g à 50 g, de préférence allant de 0,2 g à 30 g, plus préférentiellement allant de 0,2 g à 20 g. De préférence, lorsque les granules de bitume selon l'invention présentent une forme spérique, hémisphérique ou ovoïde, les granules selon l'invention présentent un poids allant de 0,2 g à 10 g, plus préférentiellement allant de 0,2 g à 5 g. De préférence, lorsque les granules de bitume selon l'invention présentent une forme tétraédrique, les granules selon l'invention présentent un poids allant de 0,1 g à 50 g, plus préférentiellement allant de 0,2 g à 50 g, encore plus préférentiellement de 0,2 à 20 g.

Selon un mode de réalisation particulier, les granules de bitume selon l'invention sont recouverts sur au moins une partie de leur surface d'un agent antiagglomérant.

Par « agent antiagglomérant », on entend au sens de l'invention tout composé qui limite et/ou réduit et/ou inhibe et/ou retarde l'agglomération et/ou l'adhésion des granules entre eux lors de leur transport et/ou de leur stockage à température ambiante et qui assure leur fluidité lors de leur manipulation.

De préférence, l'agent antiagglomérant est choisi parmi les agents antiagglomérants particulaires, les agents antiagglomérants filmogènes et leurs mélanges.

### Les agents antiagglomérants particulaires

Selon une première variante, l'agent antiagglomérant est choisi parmi les agents antiagglomérants particulaires, de préférence d'origine minérale ou organique, plus préférentiellement d'origine minérale.

Par « agent antiagglomérant particulaire », on entend au sens de l'invention un agent antiagglomérant qui se présente à température ambiante sous la forme de particules divisées, notamment sous la forme de copeaux, de paillettes ou encore d'une poudre.

De préférence, l'agent antiagglomérant particulaire est choisi parmi : le talc ; les fines généralement de diamètre inférieur à 125 µm, telles que les fines siliceuses, à l'exception des fines calcaires ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les fumées de silice, les fumées de silice fonctionnalisées, notamment les fumées de silice hydrophobe ou hydrophile, les silices pyrogénées, notamment les silices pyrogénées hydrophobes ou hydrophiles, les silicates, les hydroxydes de silicium et les oxydes de silicium ; la poudre de matière plastique; la chaux ; la chaux hydratée ; le plâtre ; la poudrette de caoutchouc ; la poudre de polymères, tels que les copolymères styrène-butadiène (SB), les copolymères styrène-butadiène-styrène (SBS) et les mélanges de ces matériaux.

Avantageusement, l'agent antiagglomérant particulaire est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; les fumées de silice, notamment les fumées de silice hydrophobe ou hydrophile ; les silices pyrogénées, notamment les silices pyrogénées hydrophobes ou hydrophiles ; et leurs mélanges.

### Les agents antiagglomérants filmogènes

Selon une seconde variante, l'agent antiagglomérant est choisi parmi les agents antiagglomérants filmogènes.

Par « agent filmogène », on entend au sens de l'invention un composé susceptible de former à la surface d'un objet sur lequel il est appliqué/déposé un film, une enveloppe ou encore une pellicule, de préférence continu(e).

De préférence, l'agent antiagglomérant filmogène est choisi parmi les agents antiagglomérants thermofusibles, les agents antiagglomérants de type gel et leurs mélanges.

Par « matériau thermofusible », on entend au sens de l'invention un matériau susceptible de se ramollir sous l'effet de la chaleur.

Lorsque l'agent antiagglomérant est choisi parmi les agents antiagglomérants thermofusibles, il est, de préférence, choisi parmi le polypropylène, le polyéthylène et les mélanges de polyéthylène et polypropylène.

Les granules de bitume enrobés d'un agent antiagglomérant thermofusible présentent l'avantage d'être prêts à l'emploi, c'est-à-dire qu'ils peuvent être directement chauffés dans le fondoir ou éventuellement introduits directement dans l'unité d'enrobage de fabrication des enrobés routiers, sans déballage préalable. L'agent antiagglomérant thermofusible qui fond avec le cœur bitumineux des granules selon l'invention n'affecte pas ses propriétés.

Par « agent antiagglomérant de type gel », on entend au sens de l'invention un composé capable d'augmenter la viscosité d'un liquide ou d'une composition de façon à former un film de gel.

De préférence, l'agent antiagglomérant de type gel présente une viscosité dynamique supérieure ou égale à 50 mPa.s, de préférence de 50 mPa.s à 550 mPa.s, plus préférentiellement de 80 mPa.s à 450 mPa.s, la viscosité étant une viscosité Brookfield mesurée à 65°C. La viscosité l'agent antiagglomérat de type gel est mesurée à 65°C au moyen d'un viscosimètre Brookfield CAP 2000+ et à une vitesse de rotation de 750 tr/min. La lecture de la mesure est réalisée après 30 secondes pour chaque température.

Préférentiellement, l'agent antiagglomérant de type gel est choisi parmi :
- les dérivés de la cellulose, de préférence les éthers de cellulose,
- les composés gélifiants, de préférence d'origine végétale ou animale, tels que : la gélatine, l'agar-agar, les alginates, les amidons, les amidons modifiés, ou les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

Plus préférentiellement, l'agent antiagglomérant de type gel est choisi parmi :
- les dérivés de la cellulose, de préférence les éthers de cellulose,
- les composés gélifiants de préférence d'origine végétale ou animale, tels que : la gélatine, l'agar-agar, les alginates, les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

Avantageusement, l'agent antiagglomérant de type gel est choisi parmi les éthers de cellulose.

De préférence, selon ce mode de réalisation, le ou les agents antiagglomérants recouvrent au moins 50% de la surface des granules, de préférence au moins 60%, préférentiellement au moins 70%, plus préférentiellement au moins 80% et encore plus préférentiellement au moins 90%.

Avantageusement, la quantité d'agent(s) antiagglomérant(s) recouvrant au moins une partie de la surface des granules est comprise entre 0,2% et 10% en masse, de préférence entre 0,5% et 8% en masse, plus préférentiellement entre 0,5% et 5% en masse, par rapport à la masse totale des granules.

De préférence également, l'épaisseur moyenne de la couche d'agent(s) antiagglomérant(s) est supérieure ou égale à 20 µm, plus préférentiellement va de 20 à 1 mm et plus préférentiellement de l'ordre de 20 à 100 µm.

### Procédé de fabrications de granules de bitume selon l'invention

La présente invention concerne également un procédé fabrication de granules de bitume tels que définis ci-dessus, ce procédé comprenant au moins les étapes suivantes:
1) la fourniture d'une composition bitumineuse comprenant au moins : du bitume, un composé de formule générale (I), un composé de formule générale (II) et un composé de formule générale (III),
2) la mise en forme de la composition obtenue en 1) sous la forme de granules, et
3) éventuellement, l'enrobage des granules sur tout ou partie de leur surface par au moins un agent antiagglomérant.

Le bitume mis-en-œuvre dans le procédé ci-dessus peut être utilisé pur ou additivé, de préférence sous forme anhydre ou encore en association avec des granulats sous la forme d'un enrobé.

L'étape 2) de mise en forme de la composition bitumineuse est réalisée selon tout procédé connu. Comme procédé adapté, on peut notamment citer le procédé de fabrication décrit dans le document US 3 026 568, le document WO 2009/153324, le document WO 2012/168380 ou encore le document WO 2018/104660.

Selon un mode de réalisation particulier, la mise en forme des granules est réalisée par égouttage, en particulier à l'aide d'un tambour. D'autres techniques peuvent être utilisées dans le procédé de fabrication des granules, en particulier le moulage, l'extrusion, la co-extrusion, ...

Selon un mode de réalisation, le procédé de fabrication de granules de bitume selon l'invention comprend, avant l'étape 1), une étape préalable de mise en contact du bitume et des composés de formule (I), (II) et (III), la mise en contact étant réalisée à une température allant de 70°C à 220°C.

Avantageusement, selon ce mode de réalisation, le procédé défini ci-dessus comprend, avant l'étape 1) les étapes suivantes :
(i) l'introduction d'un bitume dans un récipient équipé de moyens de mélange, et son chauffage à une température allant de 70°C à 220°C, de préférence allant de 90°C à 180°C, encore plus préférentiellement allant de 110°C à 180°C,
(ii) l'introduction simultanée ou successive des composés de formule (I), (II) et (III), et
(iii) le mélange de la composition bitumineuse à une température allant de 70°C à 220°C, de préférence allant de 90°C à 180°C, encore plus préférentiellement allant de 110°C à 180°C, de préférence jusqu'à l'obtention d'une composition homogène.

Les composés de formule (I), (II) et (III) peuvent être mis en contact avec le bitume de manière simultanée, par addition directe des composés de formule (I), (II) et (III) dans le bitume, ou bien par ajouts successifs des différents composés de formule (I), (II) et (III). De préférence, les composés de formule (I), (II) et (III) sont mis en contact avec le bitume à une température allant de 90°C à 180°C, plus préférentiellement allant de 110°C à 180°C.

L'étape 3) d'enrobage des granules peut être réalisée selon tout procédé connu. L'enrobage peut par exemple être réalisé par trempage des granules de bitume obtenus à la fin de l'étape 2) dans une composition de revêtement comprenant un ou plusieurs agents antiagglomérants, suivi d'une étape de séchage. L'étape 3) d'enrobage peut encore être réalisée au moyen d'un procédé en lit fluidisé, comme décrit par exemple dans US 5,236,503 ou dans EP 1 407 814.

### Procédé de transport et/ou de stockage et/ou de manipulation

L'invention concerne également un procédé de transport et/ou de stockage et/ou de manipulation d'une composition bitumineuse, ladite composition bitumineuse étant transportée et/ou stockée et/ou manipulée à température ambiante, notamment à température ambiante élevée, sous la forme de granules de bitume tels que définis ci-dessus.

De préférence, la composition bitumineuse est transportée et/ou stockée à une température ambiante, notamment à une température ambiante élevée pendant une durée supérieure ou égale à 2 mois, préférence à 3 mois. On entend par température ambiante, la température d'usage de la composition bitumineuse, étant entendu que la température ambiante implique qu'aucun apport de chaleur n'est apporté autre que celui résultant des conditions climatiques. Ainsi, la température ambiante peut atteindre des valeurs élevées, inférieures à 100°C durant les périodes estivales, en particulier dans les régions géographiques à climat chaud. De préférence, la température ambiante est inférieure à 100°C. Avantageusement, la température ambiante est de 20°C à 50°C, de préférence de 25°C à 50°C, de préférence de 25°C à 40°C. Avantageusement, la température ambiante élevée est de 40°C à 90°C, de préférence de 50°C à 85°C encore plus préférentiellement de 50°C à 75°C, encore plus préférentiellement de 50°C à 70°C.

Les granules de bitume selon l'invention sont remarquables en ce qu'ils sont facilement manipulables, même à des températures ambiantes élevées. Les granules de bitume selon l'invention permettent en particulier le transport et/ou le stockage de la composition bitumineuse dont ils sont composés dans des conditions optimales, en particulier sans l'apparition de phénomènes de fluage lors de leur transport et/ou de leur stockage, même lorsque la température ambiante est élevée et sans dégrader les propriétés de ladite composition bitumineuse, voire en les améliorant.

### Utilisation des compositions bitumineuses selon l'invention

Diverses utilisations des granules de bitume selon l'invention sont envisagées, notamment pour la préparation d'un liant bitumineux, de préférence anhydre.

La présente invention concerne en particulier l'utilisation de granules de bitume selon l'invention comme liant routier. De préférence, les granules de bitume selon l'invention sont utilisés, éventuellement en mélange avec des granulats ou des agrégats d'enrobés bitumineux recyclés, pour fabriquer un enduit superficiel, un enrobé à chaud, une couche de base, une couche de liaison, une couche d'accrochage ou une couche de roulement.

Ces applications visent notamment des enrobés bitumineux comme matériaux pour la construction et l'entretien des corps de chaussée et de leur revêtement, ainsi que pour la réalisation de tous travaux de voiries. On peut citer d'autres exemples d'associations d'une composition bitumineuse et de granulats possédant des propriétés particulières, telles que les couches anti-orniérantes, les enrobés drainants, ou les asphaltes (mélange entre un liant bitumineux et des granulats du type du sable).

L'invention concerne en particulier un procédé de fabrication d'enrobés comprenant au moins un liant routier et des granulats ou des agrégats d'enrobés bitumineux recyclés, le liant bitumineux étant sous la forme de granules de bitume tels que définis ci-dessus.

De préférence, le procédé de fabrication d'enrobés selon l'invention comprend au moins les étapes suivantes :
- le chauffage des granulats ou des agrégats à une température allant de 100°C à 180°C, de préférence de 120°C à 180°C,
- le mélange des granulats ou des agrégats avec le liant routier dans une cuve telle qu'un malaxeur ou un tambour malaxeur, notamment sous forme solide et divisée,
- obtention d'enrobés.

Le procédé de fabrication d'enrobés selon l'invention ne requiert avantageusement pas d'étape de chauffage du liant routier avant mélange avec les agrégats d'enrobés recyclés ou les granulats car au contact du mélange d'agrégats chaud ou au contact du mélange de granulats chaud, le liant routier sous forme de granules selon l'invention fond.

L'invention a encore pour objet un procédé de préparation d'un enduit superficiel, un enrobé à chaud, un enrobé tiède, ledit liant étant associé à des granulats et/ou des fraisats de recyclage, ce procédé comprenant la mise en œuvre de granules de bitume tels que définis ci-dessus.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### Exemples :

Dans ces exemples, les parties et pourcentages sont exprimés en poids sauf indication contraire.

### Matériel et méthodes

Les caractéristiques rhéologiques et mécaniques du bitume et des compositions bitumineuses auxquelles on fait référence dans ces exemples sont mesurées suivant les méthodes indiquées dans le tableau 1.

**Tableau 1**

| **Propriété** | **Abréviation** | **Unité** | **Norme de mesure** |
|---|---|---|---|
| Pénétrabilité à l'aiguille à 25°C | P₂₅ | 1/10mm | NF EN 1426 |
| Température de ramollissement bille et anneau | TBA | °C | NF EN 1427 |
| Force maximale | Fmax | N | Voir protocole ci-dessous |

### Base bitume :

On choisit une base bitume de grade 35/50, notée B0, ayant une pénétrabilité P25 de 44 1/10 mm et une TBA de 51,6°C et disponible commercialement auprès de Total Marketing Services.

### Les additifs :

- Additif **A1** de formule (I) : l'acide sébacique,
- Additif **A2** de formule (II) : le N,N'-éthylènedi(stéaramide) commercialisé par la société Croda sous le nom Crodawax 140 ^{®}, et
- Additif **A3** de formule (III) le 2',3-bis[(3-[3, 5-di-tert-butyl-4-hydroxyphényl]propionyl)]propionohydrazide (CAS 32687-78-8) commercialisé par la société BASF sous la marque Irganox MD 1024^{®}.

### Méthode de préparation des compositions bitumineuses :

La base bitume (**B₀**) est introduite dans un réacteur maintenu à 160°C sous agitation à 300 tours/min pendant deux heures. On introduit ensuite dans le réacteur les différents additifs. Le contenu du réacteur est maintenu à 160°C sous agitation à 300 tours/min pendant 1 heure.

### Méthode de préparation de granules de bitume

### I- Préparation des cœurs des granules

### a) Méthode générale pour la préparation des cœurs en liant des granules

La composition bitumineuse préparée ci-dessus est réchauffée à 160°C pendant deux heures à l'étuve avant d'être coulée dans un moule en silicone présentant différents trous de forme sphérique de façon à former les cœurs de liant solide. Après 30 minutes, le liant solide sous forme de granules non enrobés est démoulé et stocké dans un plateau recouvert de papier siliconé. On laisse ensuite refroidir les cœurs en liant à température ambiante pendant 10 à 15 minutes.

### b) Méthode générale pour la préparation des cœurs en bitume des granules selon l'invention avec un procédé industriel

Pour la mise en œuvre de cette méthode, on peut utiliser un dispositif et un procédé tels que décrits de façon très détaillée dans le brevet US 4 279 579. Différents modèles de ce dispositif sont disponibles commercialement auprès de la société Sandvik sous le nom commercial de Rotoform ^{®}.

La composition bitumineuse préparée ci-dessus est versée dans le réservoir d'un tel dispositif et est maintenue à une température comprise entre 130 et 160°C. Une ou plusieurs buses d'injection permet(tent) le transfert de la composition de bitume selon l'invention à l'intérieur du double tambour de pastillation comportant un tambour externe rotatif, les deux tambours étant équipés de fentes, de buses et d'orifices permettant la pastillation de gouttes de bitume au travers du premier tambour fixe et des orifices présentant un diamètre compris entre 2 et 8 mm du tambour externe rotatif. Les gouttes de bitume sont déposées sur la face supérieure d'une bande de roulement, horizontale, entrainée par des rouleaux.

### II - Enrobage des cœurs de granules

Les cœurs en bitume obtenus en I- sont versés dans une composition de revêtement. Ils sont ensuite agités manuellement dans la solution pendant quelques minutes puis ils sont retirés pour être déposés sur une plaque et laissés à sécher à température ambiante (environ 30°C).

On obtient ainsi des granules de bitume solide à structure cœur/enveloppe.

### Protocole de mesure de la force maximale (Fₘₐₓ)

Cet essai est mis en œuvre afin d'évaluer la résistance à la compression d'une composition bitumineuse soumise à une charge à vitesse constante imposée et à une température de 50°C.

La mesure de la force maximale (Fₘₐₓ) est réalisée à l'aide d'un analyseur de texture commercialisé sous le nom LF Plus par la société LLOYD Instruments et équipé d'une enceinte thermique. Pour ce faire, on place une boîte métallique et cylindrique contenant une masse de 60 g de la composition bitumineuse à analyser à l'intérieur de l'enceinte thermique réglée à une température de 50°C. Le piston de l'analyseur de texture est un cylindre de diamètre égal à 25 mm et de hauteur 60 mm. Le piston cylindrique est au départ placé au contact de la surface supérieure de la composition bitumineuse. Ensuite, il se déplace verticalement vers le bas, à une vitesse constante de 1 mm/min, sur une distance calibrée de 10 mm de manière à exercer une force de compression sur la surface supérieure de la composition bitumineuse. L'analyseur de texture mesure la force maximale de compression appliquée par le piston sur la composition bitumineuse à 50°C.

La mesure de la force maximale de compression permet d'évaluer la capacité de la composition bitumineuse à résister à la déformation. Plus la valeur de la force maximale est importante, meilleure sera la résistance à la déformation de granules de bitume préparés à partir de cette composition bitumineuse.

### Résultats

### 1. Préparation des différentes compositions

Les compositions **C₁** à **C₈** correspondant aux mélanges détaillés dans le tableau 2 sont préparées selon le protocole I - b) décrit ci-dessus.

Les compositions **C₁** à **C₆** sont comparatives.

Les compositions **C₇** et **C₈** sont selon l'invention.

**Tableau 2**

| | **1 additif** | | | **2 additifs** | | | **3 additifs** | |
|---|---|---|---|---|---|---|---|---|
| | **C₁** | **C₂** | **C₃** | **C₄** | **C₅** | **C₆** | **C₇** | **C₈** |
| **B₀** (%) | 98,5 | 97,5 | 99,25 | 96,0 | 95,3 | 95,3 | 96,2 | 96,0 |
| **A₁** (%) | 1,5 | - | - | 1,5 | - | 4,0 | 1,2 | 1,5 |
| **A₂** (%) | - | 2,5 | - | 2,5 | 4,0 | 0 | 2,0 | 1,6 |
| **A₃** (%) | - | - | 0,75 | 0 | 0,7 | 0,7 | 0,6 | 1,9 |
| **A₁+A₂+A₃** (%) | 1,5 | 2,5 | 0,75 | 4 | 4,7 | 4,7 | 3,8 | 5 |

### 2. Propriétés rhéologiques et mécaniques des compositions C₁ à C₈

La pénétrabilité à 25°C, la température de ramollissement bille et anneau et la force maximale des compositions **C₁** à **C₈** préparées ci-dessus ont été mesurées selon les protocoles définis ci-dessus.

Les résultats de ces mesures sont donnés dans le tableau 3 ci-dessous.

**Tableau 3**

| | **B₀** | **C₁** | **C₂** | **C₃** | **C₄** | **C₅** | **C₆** | **C₇** | **C₈** |
|---|---|---|---|---|---|---|---|---|---|
| **P₂₅** (1/10 mm) | 44 | 26 | 35 | 35 | 20 | 28 | 23 | 20 | 17 |
| **TBA** (°C) | 51,6 | 106,5 | 86,5 | 102,0 | 106,0 | 103,5 | 99,5 | 105,5 | 96,5 |
| **Fₘₐₓ** (N) | 0,9 | 23,6 | 2,98 | 75 | 83 | 78,9 | 85,7 | 192 | 310 |

### Pénétrabilité à 25°C (P₂₅)

Les compositions **C₇** et **C₈** selon l'invention présentent des valeurs de pénétrabilité réduites par rapport à celles des compositions **C₁** à **C₃** comprenant un unique additif **A₁, A₂** ou **A₃.**

Les compositions **C₇** et **C₈** selon l'invention présentent des valeurs de pénétrabilité similaires ou réduites par rapport à celles des compositions **C₄** à **C₆** comprenant l'association de deux additifs **A₁** et/ou **A₂** et/ou **A₃.**

Les compositions bitumineuses selon l'invention présentent ainsi une pénétrabilité similaire ou réduite, par rapport à celle de compositions comprenant uniquement un ou deux additifs choisis parmi **A₁, A₂** et **A₃.**

### Température de ramollissement bille et anneau (TBA)

Les compositions **C₁** à **C₈** présentent une température de ramollissement bille et anneau similaire.

### Force maximale (Fₘₐₓ)

Parmi les compositions **C₁** à **C₆,** la valeur la plus haute de force maximale est atteinte par la composition **C₆** avec 85,7 N.

La composition **C₇** selon l'invention présente une force maximale égale à 192 N, soit de plus de 2 fois supérieure à celle de la composition **C₆.**

La composition **C₈** selon l'invention présente une force maximale égale à 310 N, soit de plus de 3,5 fois supérieure à celle de la composition **C₆.**

Les compositions selon l'invention présentent donc une force maximale nettement supérieure à celle des compositions **C₁** à **C₆.**

La force maximale élevée des compositions selon l'invention témoigne d'une résistance à la déformation améliorée des compositions selon l'invention par rapport aux compositions de l'art antérieur **C₁** à **C₆.**

Mises sous la forme de granules, les compositions **C₇** et **C₈** selon l'invention sont stables au stockage et présentent notamment une résistance au fluage améliorée par rapport à des granules obtenus à partir des compositions **C₁** à **C₆.**

## Revendications

1. Granules de bitume comprenant au moins :
a) du bitume,
b) un composé de formule générale (I):
R₁-(COOH)_{z} (I)
dans laquelle R₁ représente une chaîne hydrocarbonée linéaire ou ramifiée comprenant de 4 à 68 atomes de carbone, et z est un entier variant de 2 à 4,
c) un composé de formule générale (II):
R₂-(NH)ₙCONH-X-(NHCO)p(NH)ₙ-R₃ (II)
dans laquelle :
- les groupements R₂ et R₃, identiques ou différents, représentent une chaîne hydrocarbonée comprenant de 1 à 22 atomes de carbone, et comprenant éventuellement des hétéroatomes tels que N, O, S, et R₃ peut être H,
- le groupement X représente une chaîne hydrocarbonée comprenant de 1 à 22 atomes de carbone, éventuellement substituée, et comprenant éventuellement des hétéroatomes, tels que N, O, S,
- n et p sont des entiers ayant une valeur de 0 ou 1 indépendamment l'un de l'autre,
d) un composé de formule générale (III) :
Arl-R-Ar2 (III)
dans laquelle :
- Ar1 et Ar2 représentent, indépendamment l'un de l'autre, un groupement aromatique comprenant de 6 à 20 atomes de carbone et choisi parmi un noyau benzène ou un système de noyaux aromatiques condensés, ledit groupement aromatique étant substitué par au moins un groupement hydroxyle, et optionnellement par un ou plusieurs groupements alkyles en C₁-C₂₀, et
- R représente un radical hydrocarboné divalent éventuellement substitué, dont la chaîne principale comprend de 6 à 20 atomes de carbone et au moins un groupement choisi parmi les fonctions amide, ester, hydrazide, urée, carbamate, anhydride.

2. Granules de bitume selon la revendication 1, dans lesquels le composé de formule (I) est choisi parmi les diacides de formule générale (IA) :
HOOC-C_{w}H_{2w}-COOH (IA)
avec w un entier variant de 4 à 22, de préférence de 4 à 12.

3. Granules de bitume selon la revendication 1 ou selon la revendication 2, dans lesquels le composé de formule générale (II) est choisi parmi les composés de formule (IIA) :
R₂-CONH-X-NHCO-R₃ (IIA)
dans laquelle R₂, R₃ et X sont tels que définis à la revendication 1.

4. Granule selon l'une quelconque des revendications précédentes, dans lequel le composé de formule générale (III) est le 2',3-bis[(3-[3, 5-di-*tert*-butyl-4-hydroxyphenyl]propionyl)] propionohydrazide.

5. Granules de bitume selon l'une quelconque des revendications précédentes comprenant de 0,1% à 10% en masse d'un ou de plusieurs composés de formule (I), plus préférentiellement de 0,5% à 6% en masse, plus préférentiellement de 0,5% à 5% en masse, encore plus préférentiellement de 0,5% à 2,5% en masse, par rapport à la masse totale des granules.

6. Granules de bitume selon l'une quelconque des revendications précédentes comprenant de 0,1% à 10% en masse d'un ou de plusieurs composés de formule (II), plus préférentiellement de 0,5% à 6% en masse, plus préférentiellement de 0,5% à 5% en masse, encore plus préférentiellement de 0,5% à 3,5% en masse, par rapport à la masse totale des granules.

7. Granules de bitume selon l'une quelconque des revendications précédentes comprenant de 0,1% à 10% en masse d'un ou de plusieurs composés de formule (III), plus préférentiellement de 0,5% à 6% en masse, plus préférentiellement de 0,5% à 5% en masse, encore plus préférentiellement de 0,5% à 3% en masse, par rapport à la masse totale des granules.

8. Granules de bitume selon l'une quelconque des revendications précédentes, lesdits granules étant recouverts sur au moins une partie de leur surface d'un agent antiagglomérant, de préférence choisi parmi les agents anti-agglomérants particulaires, les agents antiagglomérants filmogènes et leurs mélanges.

9. Procédé de fabrication de granules de bitume selon l'une quelconque des revendications précédentes comprenant au moins les étapes suivantes :
1) la fourniture d'une composition bitumineuse comprenant au moins : du bitume, un composé de formule générale (I), un composé de formule générale (II) et un composé de formule (III),
2) la mise en forme de ladite composition bitumineuse sous la forme de granules, et
3) éventuellement, l'enrobage des granules sur tout ou partie de leur surface par au moins un agent anti-agglomérant.

10. Granules de bitume selon l'une quelconque des revendications 1 à 8 susceptibles d'être obtenus par la mise en œuvre du procédé selon la revendication 9.

11. Utilisation de granules de bitume selon l'une quelconque des revendications 1 à 8 ou 10 comme liant routier.

12. Utilisation selon la revendication 11 pour la fabrication d'enrobés.

13. Procédé de fabrication d'enrobés comprenant au moins un liant routier et des granulats ou des agrégats d'enrobés bitumineux recyclés, le liant routier étant sous la forme de granules de bitume selon l'une quelconque des revendications 1 à 8 ou 10, ce procédé comprenant au moins les étapes de :
- chauffage des granulats ou des agrégats à une température allant de 100°C à 180°C, de préférence de 120°C à 180°C,
- mélange des granulats ou des agrégats avec le liant routier dans une cuve telle qu'un malaxeur ou un tambour malaxeur,
- obtention d'enrobés.

14. Procédé selon la revendication 13 qui ne comporte pas d'étape de chauffage du liant routier avant son mélange avec les granulats ou les agrégats.

15. Procédé de transport et/ou de stockage et/ou de manipulation de bitume, ledit bitume étant transporté et/ou stocké et/ou manipulé à température ambiante sous la forme de granules de bitume selon l'une quelconque des revendications 1 à 8 ou 10.

## Patentansprüche

1. Bitumenkörner, die zumindest Folgendes umfassen:
a) Bitumen,
b) eine Verbindung nach der folgenden allgemeinen Formel (I) :
R₁-(COOH)_{z} (I)
wobei R₁ für eine unverzweigte oder verzweigte Kohlenwasserstoffkette steht, die 4 bis 68 Kohlenstoffatome umfasst, und z für eine ganze Zahl im Bereich von 2 bis 4 steht,
c) eine Verbindung nach der folgenden allgemeinen Formel (II):
R₂-(NH)ₙCONH-X-(NHCO)ₚ(NH)ₙ-R₃ (II)
wobei:
- die Gruppen R₂ und R₃, welche vollkommen gleichartig oder verschiedenartig sind, für eine Kohlenwasserstoffkette stehen, die 1 bis 22 Kohlenstoffatome umfasst, wobei sie weiterhin möglicherweise Heteroatome wie etwa N, O, S umfasst, und R₃ für H stehen kann,
- die Gruppe X für eine Kohlenwasserstoffkette steht, die 1 bis 22 Kohlenstoffatome umfasst, möglicherweise substituiert ist, und möglicherweise Heteroatome wie etwa N, O, S umfasst,
- n und p für ganze Zahlen stehen, deren Wert unabhängig voneinander gleich 0 oder 1 ist,
d) eine Verbindung nach der allgemeinen Formel (III) :
Ar1-R-Ar2 (III)
wobei:
- Ar1 und Ar2 unabhängig voneinander für eine aromatische Gruppe stehen, die 6 bis 20 Kohlenstoffatome umfasst und aus einem Benzolring oder einem System kondensierter Aromatenringe ausgewählt ist, wobei die aromatische Gruppe mit mindestens einer Hydroxylgruppe und möglicherweise mit einer oder mehreren C₁-C₂₀-Alkylgruppen substituiert ist, und
- R für einen zweibindigen Kohlenwasserstoffrest steht, der möglicherweise substituiert ist, wobei seine Hauptkette 6 bis 20 Kohlenstoffatome und mindestens eine Gruppe umfasst, welche aus den Funktionen Amid, Ester, Hydrazid, Harnstoff, Carbamat, Anhydrid ausgewählt ist.

2. Bitumenkörner nach Anspruch 1, wobei die Verbindung nach Formel (I) aus den Dicarbonsäuren nach der folgenden allgemeinen Formel (IA) ausgewählt ist:
HOOC-C_{w}H_{2w}-COOH (IA)
in welcher w für eine ganze Zahl im Bereich von 4 bis 22, vorzugsweise von 4 bis 12, steht.

3. Bitumenkörner nach Anspruch 1 oder nach Anspruch 2, wobei die Verbindung nach Formel (II) aus den Verbindungen nach Formel (IIA) ausgewählt ist:
R₂-CONH-X-NHCO-R₃ (IIA)
wobei R₂, R₃ und X den Begriffsbestimmungen in Anspruch 1 entsprechen.

4. Korn nach einem beliebigen der vorhergehenden Ansprüche, wobei es sich bei der Verbindung nach der allgemeinen Formel (III) um 2',3-bis[(3-[3,5-di-tert.-Butyl-4-hydroxyphenyl]propionyl)]propionohydrazid handelt.

5. Bitumenkörner nach einem beliebigen der vorhergehenden Ansprüche, wobei diese 0,1% bis 10 % nach Masse an einer oder mehreren Verbindungen nach Formel (I), stärker bevorzugt 0,5 % bis 6 % nach Masse, stärker bevorzugt 0,5 % bis 5 % nach Masse, noch stärker bevorzugt 0,5 % bis 2,5 % nach Masse umfassen, bezogen auf die Gesamtmasse der Körner.

6. Bitumenkörner nach einem beliebigen der vorhergehenden Ansprüche, wobei diese 0,1% bis 10 % nach Masse an einer oder mehreren Verbindungen nach Formel (II), stärker bevorzugt 0,5 % bis 6 % nach Masse, stärker bevorzugt 0,5 % bis 5 % nach Masse, noch stärker bevorzugt 0,5 % bis 3,5 % nach Masse umfassen, bezogen auf die Gesamtmasse der Körner.

7. Bitumenkörner nach einem beliebigen der vorhergehenden Ansprüche, wobei diese 0,1% bis 10 % nach Masse an einer oder mehreren Verbindungen nach Formel (III), stärker bevorzugt 0,5 % bis 6 % nach Masse, stärker bevorzugt 0,5 % bis 5 % nach Masse, noch stärker bevorzugt 0,5 % bis 3 % nach Masse umfassen, bezogen auf die Gesamtmasse der Körner.

8. Bitumenkörner nach einem beliebigen der vorhergehenden Ansprüche, wobei die Körner zumindest auf einem Abschnitt ihrer Oberfläche von einem Trennmittel bedeckt sind, welches vorzugsweise aus partikelförmigen Trennmitteln, den filmbildenden Trennmitteln und deren Mischungen ausgewählt ist.

9. Verfahren zur Herstellung von Bitumenkörnern nach einem beliebigen der vorhergehenden Ansprüche, wobei es zumindest die folgenden Schritte umfasst:
1) Bereitstellen einer Bitumenzusammensetzung, die zumindest Folgendes umfasst: Bitumen, eine Verbindung nach der allgemeinen Formel (I), eine Verbindung nach der allgemeinen Formel (II) und eine Verbindung nach der allgemeinen Formel (III),
2) Formen der Bitumenzusammensetzung, sodass Körner entstehen, und
3) möglicherweise Überziehen der Körner auf der Gesamtheit oder einem Abschnitt ihrer Oberfläche mit mindestens einem Trennmittel.

10. Bitumenkörner nach einem beliebigen der Ansprüche 1 bis 8, wobei diese erhalten werden können, indem das Verfahren nach Anspruch 9 umgesetzt wird.

11. Verwendung der Bitumenkörner nach einem beliebigen der Ansprüche 1 bis 8 oder 10 als Bindemittel für den Straßenbau.

12. Verwendung nach Anspruch 11 zur Herstellung von Asphaltmischgut.

13. Verfahren zur Herstellung von Asphaltmischgut, welches zumindest ein Bindemittel für den Straßenbau sowie Gesteinskörnungen oder Klumpen von wiederverwertetem Bitumenasphaltmischgut umfasst, wobei das Bindemittel für den Straßenbau in Form von Bitumenkörnern nach einem beliebigen der Ansprüche 1 bis 8 oder 10 vorliegt, wobei das Verfahren zumindest die folgenden Schritte umfasst:
- Erhitzen der Gesteinskörnungen oder der Klumpen auf eine Temperatur im Bereich von 100 °C bis 180 °C, vorzugsweise von 120 °C bis 180 °C,
- Vermischen der Gesteinskörnungen oder der Klumpen mit dem Bindemittel für den Straßenbau in einem Behälter wie etwa einem Mischgerät oder einer Mischtrommel,
- Erhalten von Asphaltmischgut.

14. Verfahren nach Anspruch 13, wobei es keinerlei Schritt aufweist, in welchem das Bindemittel für den Straßenbau erhitzt wird, bevor es mit den Gesteinskörnungen oder den Klumpen vermischt wird.

15. Verfahren zum Transport und/oder zur Lagerung und/oder zur Handhabung von Bitumen, wobei das Bitumen in Form von Bitumenkörnern nach einem beliebigen der Ansprüche 1 bis 8 oder 10 bei Umgebungstemperatur transportiert und/oder gelagert und/oder gehandhabt wird.

## Claims

1. Bitumen pellets comprising at least:
a) bitumen,
b) a compound of general formula (I):
R₁-(COOH)_{z} (I)
in which R₁ represents a linear or branched hydrocarbon chain comprising from 4 to 68 carbon atoms, and z is an integer ranging from 2 to 4,
c) a compound of general formula (II):
R₂-(NH)ₙCONH-X-(NHCO)ₚ(NH)ₙ-R₃ (II)
in which:
- the R₂ and R₃ groups, which may be identical or different, represent a hydrocarbon chain comprising from 1 to 22 carbon atoms and optionally comprising heteroatoms such as N, O, S, and R₃ may be H,
- the group X represents an optionally substituted hydrocarbon chain comprising from 1 to 22 carbon atoms and optionally comprising heteroatoms such as N, O, S,
- n and p are integers having a value of 0 or 1 independently of one another,
d) a compound of general formula (III):
Ar1-R-Ar2 (III)
in which:
- Ar1 and Ar2 represent, independently of one another, an aromatic group comprising from 6 to 20 carbon atoms and chosen from a benzene ring or a system of fused aromatic rings, said aromatic group being substituted by at least one hydroxyl group and optionally by one or more C₁-C₂₀ alkyl groups, and
- R represents an optionally substituted divalent hydrocarbon radical, the main chain of which comprises from 6 to 20 carbon atoms and at least one group chosen from amide, ester, hydrazide, urea, carbamate and anhydride functions.

2. The bitumen pellets as claimed in claim 1, wherein the compound of formula (I) is chosen from diacids of general formula (IA):
HOOC-C_{w}H_{2w}-COOH (IA)
with w an integer ranging from 4 to 22, preferably from 4 to 12.

3. The bitumen pellets as claimed in claim 1 or as claimed in claim 2, wherein the compound of general formula (II) is chosen from compounds of formula (IIA):
R₂-CONH-X-NHCO-R₃ (IIA)
in which R₂, R₃ and X are as defined in claim 1.

4. The pellet as claimed in any one of the preceding claims, in which the compound of general formula (III) is 2',3-bis[(3-[3,5-di-*tert*-butyl-4-hydroxyphenyl]propionyl)]propionohydrazide.

5. The bitumen pellets as claimed in any one of the preceding claims, comprising from 0.1% to 10% by mass of one or more compounds of formula (I), more preferentially from 0.5% to 6% by mass, more preferentially from 0.5% to 5% by mass, and even more preferentially from 0.5% to 2.5% by mass, relative to the total mass of the pellets.

6. The bitumen pellets as claimed in any one of the preceding claims, comprising from 0.1% to 10% by mass of one or more compounds of formula (II), more preferentially from 0.5% to 6% by mass, more preferentially from 0.5% to 5% by mass, and even more preferentially from 0.5% to 3.5% by mass, relative to the total mass of the pellets.

7. The bitumen pellets as claimed in any one of the preceding claims, comprising from 0.1% to 10% by mass of one or more compounds of formula (III), more preferentially from 0.5% to 6% by mass, more preferentially from 0.5% to 5% by mass, and even more preferentially from 0.5% to 3% by mass, relative to the total mass of the pellets.

8. The bitumen pellets as claimed in any one of the preceding claims, said pellets being covered on at least a portion of their surface with an anti-agglomerating agent, preferably chosen from particulate anti-agglomerating agents, film-forming anti-agglomerating agents, and mixtures thereof.

9. A method for manufacturing bitumen pellets as claimed in any one of the preceding claims, comprising at least the following steps:
1) providing a bituminous composition comprising at least: bitumen, a compound of general formula (I), a compound of general formula (II) and a compound of formula (III),
2) forming said bituminous composition into the form of pellets, and
3) optionally, coating the pellets on all or part of their surface with at least one anti-agglomerating agent.

10. The bitumen pellets as claimed in any one of claims 1 to 8, capable of being obtained by implementing the method as claimed in claim 9.

11. The use of bitumen pellets as claimed in any one of claims 1 to 8 or 10 as road binder.

12. The use as claimed in claim 11 for the manufacture of bituminous mixes.

13. A method for manufacturing bituminous mixes comprising at least one road binder and aggregates or recycled bituminous mix aggregates, said road binder being in the form of bitumen pellets as claimed in any one of claims 1 to 8 or 10, this method comprising at least the steps of:
- heating the aggregates to a temperature ranging from 100°C to 180°C, preferably from 120°C to 180°C,
- mixing the aggregates with the road binder in a vessel such as a mixer or a drum mixer,
- obtaining bituminous mixes.

14. The method as claimed in claim 13, which does not comprise a step of heating the road binder before it is mixed with the aggregates.

15. A method for transporting and/or storing and/or handling bitumen, said bitumen being transported and/or stored and/or handled at ambient temperature in the form of bitumen pellets as claimed in any one of claims 1 to 8 or 10.
